(19) Europäisches Patentamt
European Patent Office
Office européen des brevets

(11) **EP 4 131 106 B1**

(12) **EUROPEAN PATENT SPECIFICATION**

(45) Date of publication and mention
of the grant of the patent:
**01.04.2026 Bulletin 2026/14**

(51) International Patent Classification (IPC):
*G06Q 10/10* (2023.01)    *G06Q 10/101* (2023.01)
*G06Q 50/18* (2012.01)

(21) Application number: **20927134.5**

(22) Date of filing: **17.08.2020**

(52) Cooperative Patent Classification (CPC):
**G06Q 10/10; G06Q 10/101; G06Q 50/10;
G06Q 50/184**

(86) International application number:
**PCT/JP2020/030989**

(87) International publication number:
**WO 2021/192344 (30.09.2021 Gazette 2021/39)**

(54) **IDEA SUPPORT DEVICE AND IDEA SUPPORT METHOD**

VORRICHTUNG UND VERFAHREN ZUR UNTERSTÜTZUNG VON IDEEN

DISPOSITIF DE PRISE EN CHARGE D'IDÉES ET PROCÉDÉ DE PRISE EN CHARGE D'IDÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2020 JP 2020057180**

(43) Date of publication of application:
**08.02.2023 Bulletin 2023/06**

(73) Proprietor: **Hitachi, Ltd.**
**Tokyo 100-8280 (JP)**

(72) Inventors:
• **NAMURA, Nobuo**
**Tokyo 100-8280 (JP)**

• **HASEBE, Tatsuya**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
JP-A- 2001 331 504      JP-A- 2005 209 187
JP-A- 2007 323 574      KR-B1- 101 066 224
US-A1- 2014 122 615     US-A1- 2014 172 787
US-A1- 2014 172 787     US-A1- 2014 280 540

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to an idea generation support device and an idea generation support method that allow a large number of persons to brainstorm ideas in an on-line manner.

Background Art

In recent years, not only the improvement of easily quantifiable performance but also the acquisition of innovative ideas for changing the lives and values of consumers have become increasingly important for product design and service design.

Various brainstorming methods, such as Osborn's checklist and brain writing, are proposed as the idea generation support method.

Particularly, brain writing is a method of forcing brainstorming participants to evoke many ideas and acquiring the evoked ideas by repeating a procedure of allowing each participant to write three own ideas on paper and hand the paper over to the next participant, and then allowing the next participant to develop and generate three own ideas by reference to the three ideas written by the preceding participant and write the three generated ideas on the paper.

It is assumed that brain writing is performed by allowing approximately one to ten persons to conduct off-line brainstorming. In recent years, however, it is proposed that on-line brainstorming be conducted by using computer devices and the Internet,

A background art related to the above-mentioned technical field is described in Japanese Patent No. 6249466 (Patent Literature 1) and in Japanese Patent No. 5353390 (Patent Literature 2).

Described in Patent Literature 1 is an on-line test method for evaluating innovation capability, such as the capability for generating many highly evaluated ideas, the capability for generating a wide variety of highly evaluated ideas, or the capability for generating rare and highly evaluated ideas by repeatedly conducting an on-line examination a maximum number of times within a time limit to let a large number of examinees select options regarding status settings on 5W1H and write ideas in accordance with the status settings, weighting the examinees' answers to questions in the on-line examination in accordance with prescribed criteria, and calculating the total scores of the examinees.

Meanwhile, described in Patent Literature 2 is an idea generation support device that includes, for each idea-generating person, idea generation strategy selection means, idea generation stimulus presentation means, strategy score calculation means, and selection condition calculation means. The idea generation strategy selection means selects a promising idea generation strategy for generating an idea having a high rating score. The idea generation stimulus presentation means generates an idea generation stimulus by using the selected idea generation strategy. The strategy score calculation means performs calculations to determine which idea generation strategy has resulted in the generation of an idea having a high rating score. The selection condition calculation means calculates the correlation between the idea generation stimulus and the rating score of a generated idea, and personalizes the parameters for generating the idea generation stimulus. That is to say, the idea generation support device described in Patent Literature 2 personalizes the idea generation stimulus appropriately for an idea-generating person by using the evaluation of a plurality of ideas previously generated by the idea-generating person. Additionally, Patent Literature 3 discloses an idea generation support system that facilitates the sequential development of ideas through stages of conception, organization, evaluation, and selection, wherein the system leverages individual thinking styles, predefined ideation techniques, and collaborative evaluation to facilitate creative synergy among participants by emphasizing personalized ideation support, diverse thinking style analysis, and flexible interface design to accommodate various ideation methods.

Citation List

Patent Literature

Patent Literature 1: Japanese Patent No. 6249466
Patent Literature 2: Japanese Patent No. 5353390
Patent Literature 3: KR 101 066 224 B1

Summary of Invention

Technical Problem

Allowing a plurality of persons to conduct brainstorming is advantageous in that a new idea can be generated by a person by using an idea generated by another person.

Meanwhile, when a large number of participants are engaged in on-line brainstorming in various time zones convenient for the individual participants, it is generally difficult for the participants to look over all existing ideas, select a good idea, and use the selected good idea.

The on-line test method described in Patent Literature 1 allows a large number of participants to write down their ideas in the on-line manner. However, Patent Literature 1 does not describe a configuration capable of using the framework of brain writing. Further, when the on-line test method described in Patent Literature 1 is used, the quality of ideas is dependent on the idea-generating capabilities of the individual participants. Therefore, it is conceivable that the on-line test method described in Patent Literature 1 is unable to enjoy the advantages of brainstorming.

Further, the idea generation support device described in Patent Literature 2 personalizes the idea generation stimulus appropriately for an idea-generating person by using the evaluation of a plurality of ideas previously generated by the idea-generating person. That is to say, according to Patent Literature 2, the evaluation of the ideas previously generated by the idea-generating person is required for selecting an appropriate idea generation stimulus. This is effective in a case where, for example, participants in in-house brainstorming are allowed to spend sufficient time in generating ideas. However, in a case where a large number of unspecified participants each propose a plurality of ideas on a short-term basis, the idea generation support device described in Patent Literature 2 may fail to function.

In view of the above circumstances, the present invention has been made to provide an idea generation support device and an idea generation support method that systematically enhance the quality and quantity of ideas by selecting a good idea through the use of collective knowledge of a large number of unspecified on-line participants, making use of the framework of brain writing, and piggybacking on the good idea.

Solution to Problem

The invention is set out in the appended set of claims. Preferable embodiments are defined in the dependent claims.

Advantageous Effects of Invention

The present invention provides an idea generation support device and an idea generation support method that systematically enhance the quality and quantity of ideas by selecting a good idea through the use of collective knowledge of a large number of unspecified on-line participants, making use of the framework of brain writing, and piggybacking on the good idea.

Problems, configurations, and advantageous effects other than those described above will become apparent from the following description of embodiments.

Brief Description of Drawings

Fig. 1 is an explanatory diagram illustrating an outline configuration of an idea generation support device 100 according to a first embodiment of the present invention.

Fig. 2 is an explanatory diagram illustrating a configuration of an interface 101 according to the first embodiment.

Fig. 3 is an explanatory diagram illustrating a configuration of the interface 101 (initial stage only) according to the first embodiment.

Fig. 4 is an explanatory diagram illustrating a configuration of an idea database 102 according to the first embodiment.

Fig. 5 is a flowchart illustrating an idea selection algorithm 103 according to the first embodiment.

Fig. 6 is an explanatory diagram illustrating a family of ideas in idea selection according to the first embodiment.

Fig. 7 is an explanatory diagram illustrating a family (straight chain) of ideas in idea selection according to the first embodiment.

Fig. 8 is an explanatory diagram illustrating a configuration (pictures) of the interface 101 according to a second embodiment of the present invention.

Fig. 9 is an explanatory diagram illustrating a configuration (graph structures) of the interface 101 according to a third embodiment of the present invention.

Description of Embodiments

Embodiments of the present invention will now be described with reference to the accompanying drawings. It should be noted that substantially identical or similar component elements are designated by the same reference signs, and in some cases, will not be redundantly described.

[First Embodiment]

First of all, an outline configuration of an idea generation support device 100 according to a first embodiment of the present invention will be described.

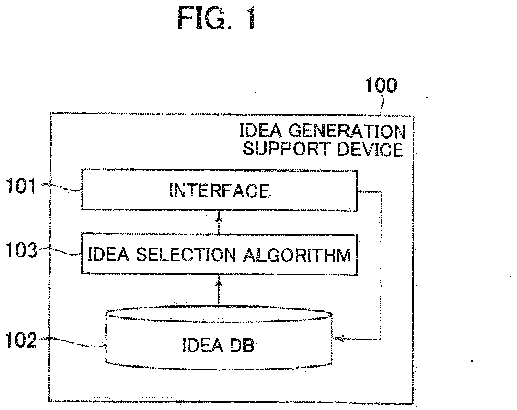

Fig. 1 is an explanatory diagram illustrating the outline configuration of the idea generation support device 100 according to the first embodiment.

The idea generation support device 100 includes an interface 101, an idea database (hereinafter referred to as the "idea DB") 102, and an idea selection algorithm 103.

The interface 101 displays a draft, and inputs a participant's evaluation of the draft and a proposal (child) that is a new idea derived from the draft regarded as a parent. The interface 101 is, for example, an input/output section including, for instance, a touch panel.

The idea DB 102 stores ideas, the evaluations of the ideas, and the parent-child relationship between the ideas. The idea DB 102 is, for example, a storage section such as a memory.

The idea selection algorithm 103 selects, as the draft, the idea to be displayed based on the evaluation thereof. The idea selection algorithm 103 is a selection section (computation section).

Meanwhile, an idea generation support method causes the idea DB 102 to store ideas, the evaluations of the ideas, and the parent-child relationship between the ideas, causes the idea selection algorithm 103 to select, as the draft, the idea to be displayed based on the evaluation thereof, and causes the interface 101 to display the draft, and input a participant's evaluation of the draft and a proposal that is a new idea derived from the draft regarded as the parent.

As described above, the idea generation support device 100 and the idea generation support method enable a participant in brainstorming to simultaneously propose an idea and evaluate a previously generated idea. Further, by selecting a draft (idea) to be referenced by the next participant for idea generation based on the evaluation, the idea generation support device 100 and the idea generation support method are able to provide support for selecting a good idea and piggybacking on ideas and thus provide idea generation support for a large number of unspecified on-line participants. By identifying a good idea based on the evaluations of the participants and displaying the identified good idea as the draft, the idea generation support device 100 and the idea generation support method are able to systematically increase the quantity of ideas and enhance the quality of ideas.

A configuration of the interface 101 according to the first embodiment will now be described.

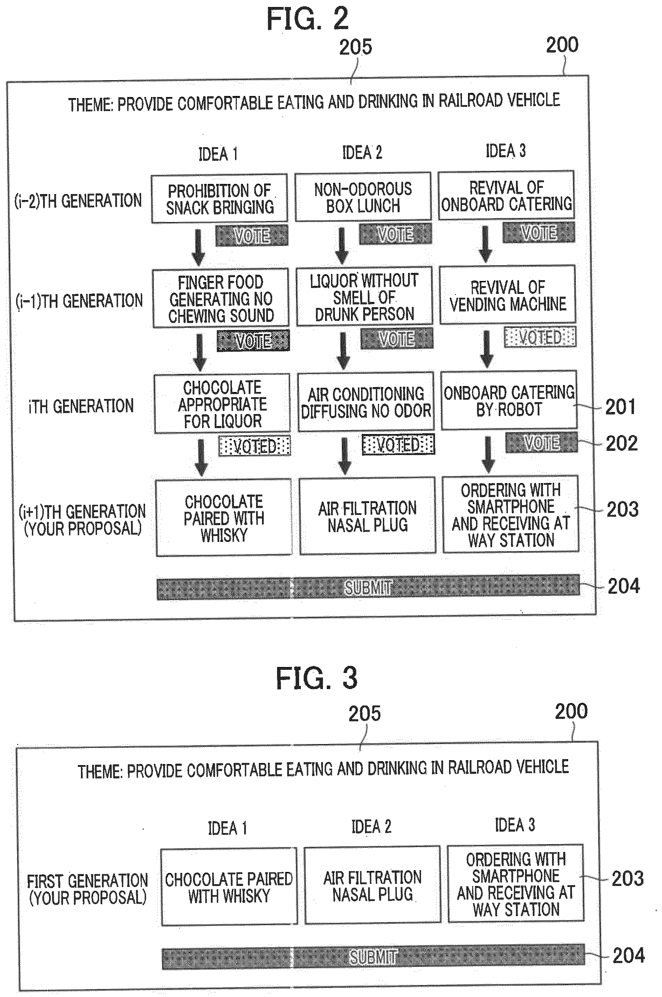

Fig. 2 is an explanatory diagram illustrating a configuration of the interface 101 according to the first embodiment.

Fig. 3 is an explanatory diagram illustrating a configuration of the interface 101 (initial stage only) according to the first embodiment.

The interface 101 includes an idea evaluation/proposal screen 200 that allows the input and output of an idea, the evaluation of (the vote on) an idea, and the submission of an idea.

As depicted in Fig. 2, the idea evaluation/proposal screen 200 includes a draft display section 201, a draft evaluation section 202, a proposal reception section 203, and a submission button 204.

As depicted in Fig. 2, the first embodiment is configured such that the draft display section 201 and the draft evaluation section 202 are provided with a total of nine ideas and a total of nine evaluation buttons (vote buttons), that is to say, the nine ideas and the nine evaluation buttons (vote buttons) for three strains (hereinafter referred to as the "families"), namely, plans 1 to 3, and for three generations, namely, the (i-2)th to ith generations.

Additionally, for increased convenience of the participants, a theme 205 of brainstorming may be displayed in the idea evaluation/proposal screen 200.

There should be at least one family and one generation. For example, since no draft exists at an initial stage of brainstorming, there may be no displayed draft. Further, since no draft exists at the initial stage of brainstorming, the interface 101 dedicated to the initial stage may be used as depicted in Fig. 3. More specifically, the idea evaluation/proposal screen 200 dedicated to the initial stage may be used.

The draft display section 201 displays, as the idea (draft) to be piggybacked on by the next idea, a previously generated idea selected by the idea selection algorithm 103.

In the first embodiment, the term "piggybacking" particularly denotes the on-line use of the framework of brain writing. More specifically, a participant in brainstorming writes a plurality of own ideas (e.g., three own ideas) on the idea evaluation/proposal screen 200, then the next participant develops and generates a plurality of own ideas (e.g., three own ideas) by reference to the ideas written by the preceding participant and writes the generated ideas on the idea evaluation/proposal screen 200.

The draft evaluation section 202 is a vote button for allowing a participant to input the evaluation of a draft. Clicking the vote button named "Vote" turns the vote button into "Voted." This raises the evaluation of a corresponding draft by a specified amount (e.g., by one).

Although a button-type evaluation scheme is adopted in the first embodiment, a slider, a radio button, or a free entry field for numerical value input may alternatively be disposed to use a score-based evaluation scheme. Another alternative is to break down an evaluation perspective, for example, into originality, feasibility, and profitability and evaluate from the individual perspectives.

The proposal reception section 203 is a free input field into which the participants write their own ideas. In the first embodiment, one of the drafts of three generations or an idea obtained by piggybacking on the immediately preceding draft (the ith generation) is to be inputted for each of three families.

The submission button 204 is used to submit input data that is inputted to the draft evaluation section 202 and the proposal reception section 203. Clicking the submission button 204 after completion of input to the draft evaluation section 202 and the proposal reception section 203 causes the idea DB 102 to record the input data.

Further, the interface 101 arranges two or more drafts in the same row or column so as to indicate that they are ideas belonging to the same family, or displays the drafts in such a manner that they are connected by lines or arrows.

As described above, disposing the draft evaluation section 202 on the idea evaluation/proposal screen 200 makes it possible to systematically enhance the quality of ideas.

A configuration of the idea DB 102 according to the first embodiment will now be described.

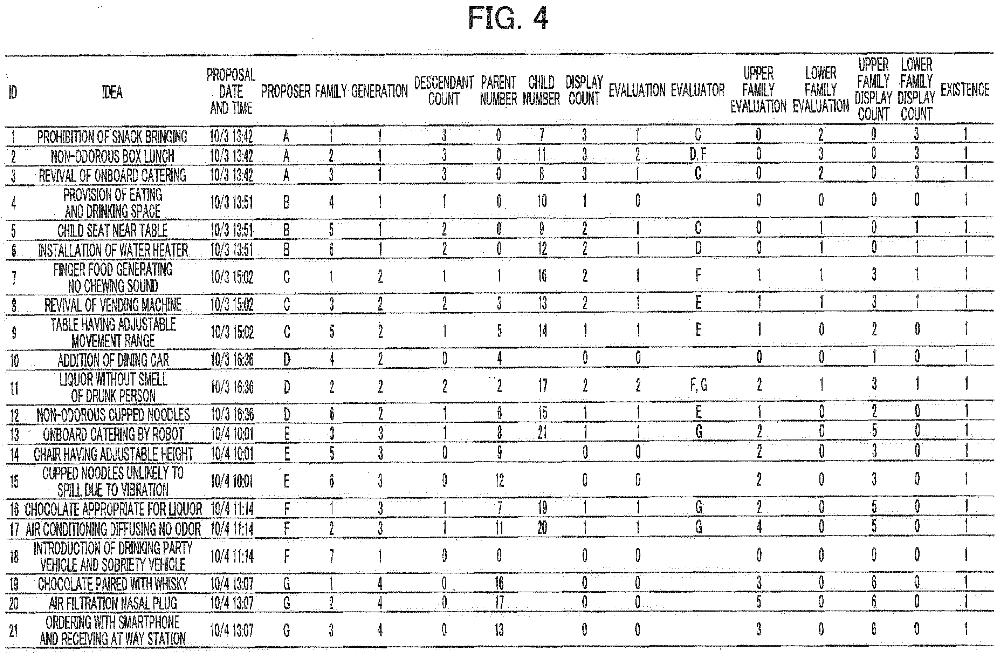

Fig. 4 is an explanatory diagram illustrating a configuration of the idea DB 102 according to the first embodiment.

The idea DB 102 stores inputted input data. More specifically, the idea DB 102 stores every idea together with information such as an ID number, a proposal date and time, and a proposer.

Every idea is stored together with information about ancestors or descendants on the assumption that the draft of the ith generation of a family and the proposal of the (i+1) th generation of the same family are parent and child.

Each column of data to be stored in the idea DB 102 is described below.

To the "ID number" column, numbers are assigned in the order of idea input.

The "Idea" column stores, as text, contents inputted to the proposal reception section 203 by the participants.

The "Proposal date and time" column stores the date and time when the participants clicked the submission button 204. It should be noted that only months, days, hours, and minutes are stored in the first embodiment. However, it is preferable that, for example, years and seconds be additionally stored.

The "Proposer" column stores the name or identification number of a participant who inputted a present idea.

In the "Family" column, the number of the family of an idea acting as the parent of a proposed idea is copied and stored. More specifically, the "Family" column stores the number of an initial idea, that is, the first idea encountered as a result of a search for a parent, and the same number is stored for ideas derived from the same initial idea. It should be noted that, for a family of the initial idea having no draft; the same number as the number of the initial idea is inputted and stored.

The "Generation" column stores information indicating the number of times the initial idea has been piggybacked on to obtain a present idea on the assumption that the initial idea is the first generation and that an idea obtained by piggybacking on the idea of the first generation is the second generation.

The "Descendant count" column stores the total number of ideas of lower families, which are the descendants of a present idea, such as children and grandchildren who piggybacked on the present idea.

The "Parent number" column stores the ID of an idea acting as the parent of a present idea. It is assumed that the parent number of the initial idea is 0.

The "Child number" column stores the ID of an idea of a child whose immediate parent is a present idea. The first embodiment is configured such that one ID is stored as the child number. However, an idea having a plurality of children may alternatively be stored. When such an alternative configuration is adopted, an array of a plurality of IDs is stored in the "Child number" column.

The "Display count" column stores the number of times a present idea has been displayed by the interface 101, or more specifically, by the draft display section 201.

The "Evaluation" column stores the total score of evaluation by the interface 101, or more specifically, the draft evaluation section 202. In the first embodiment, the button-type evaluation scheme is adopted so that a score of 1 is provided by each vote, and that the number of votes is stored in the "Evaluation" column. Meanwhile, in a case where a score-based evaluation scheme is adopted through the use of a slider, a radio button, or a free entry field for numerical value input, the "Evaluation" column stores the total scores of evaluation by the individual participants.

The "Evaluator" column stores the names and identification numbers of participants who have clicked the vote buttons. In the case where the score-based evaluation scheme is adopted, the "Evaluator" column stores the names and identification numbers of participants whose evaluation has given a rating equal to or higher than a standard rating (e.g., 4 or more on a 5-point evaluation scale).

The "Upper family evaluation" column stores the total score of evaluation of ideas of an upper family that act as the ancestors of a present idea. In this instance, the ideas of the upper family are all ideas that are encountered as a result of a search for a parent, and do not include ideas corresponding to uncles and aunts.

The "Lower family evaluation" column stores the total score of evaluation of ideas of a lower family that act as the descendants of a present idea. In a case where the present idea or its descendants have a plurality of children, the lower family includes all descendants of the children.

The "Upper family display count" column stores the total number of times all ideas of an upper family of a present idea have been displayed.

The "Lower family display count" column stores the total number of times all ideas of a lower family of a present idea have been displayed.

The "Existence" column is used as a flag indicating whether a present idea is to be selected as a draft. A flag of 1 indicates that the present data is a target of selection. A flag of 0 indicates that the present data is not a target of selection.

The idea selection algorithm 103 according to the first embodiment will now be described.

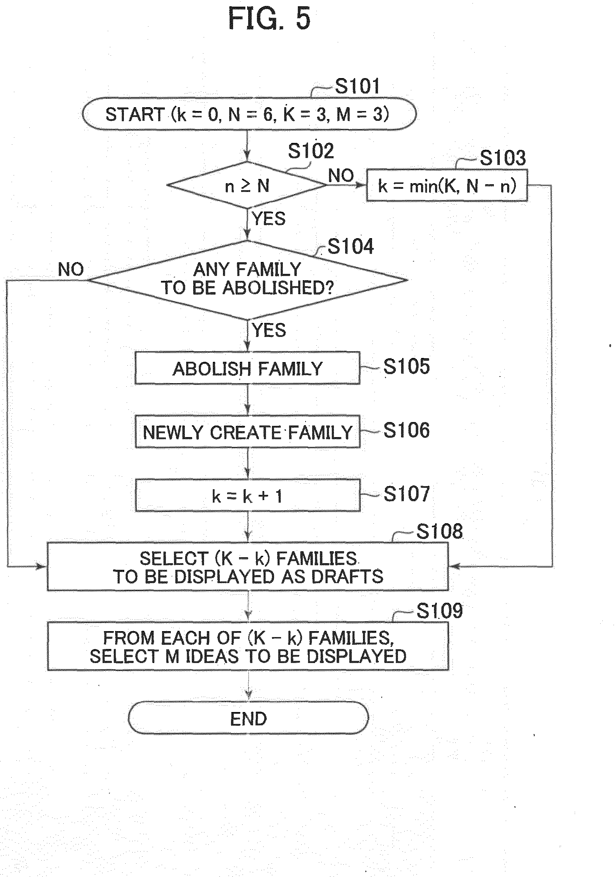

Fig. 5 is a flowchart illustrating the idea selection algorithm 103 according to the first embodiment.

In accordance with the flowchart depicted in Fig. 5, the idea selection algorithm 103 selects, from the idea DB 102, the draft to be displayed on the interface 101, or more specifically, the idea evaluation/proposal screen 200. That is to say, the idea selection algorithm 103 selects, as a draft, the idea to be displayed based on evaluation, and selects, as drafts, two or more ideas from a family.

In a case where the idea to be displayed based on evaluation is to be selected, the steps described below are performed.

First of all, parameters n, k, N, K, and M are initialized (step S101).

n is the number of ideas stored in the idea DB 102. Each time the idea selection algorithm 103 performs computation, a maximum ID value (IDmax) in the idea DB 102 is acquired to perform setup so that n = IDmax. Since the number of ideas is 0 at a beginning stage of brainstorming, n = 0.

k is the number of families to be newly created. The initial value of k is 0.

N, K, and M are constants of natural numbers that are to be determined as appropriate by an administrator of the idea generation support device 100 or an organizer of brainstorming. N is the total number of initial ideas (or families). In the first embodiment, N = 6 as depicted in Fig. 4. K and M are indicative of the drafts to be displayed on the idea evaluation/proposal screen 200, and the number of families (K) and the number of generations (M), respectively. It is necessary to satisfy the relational expression $K \leq N$. In the first embodiment, K = 3 and M = 3 as depicted in Fig. 2.

Next, n and N are compared (step S102).

If n < N ("NO" at step S102), processing proceeds to step S103. In this case, creation of a new idea is preferred to piggybacking on an existing idea. Therefore, k = min(K,N-n). Consequently, the smaller one of K or (N-n) is substituted into k (step S103). Upon completion of step S103, processing proceeds to step S108.

If $n \geq N$ ("YES" at step S102), processing proceeds to step S104. In this case, it is concluded that the generation of a good idea cannot be expected, or that no further piggybacking or evaluation is required because piggybacking and evaluation have been completed a sufficient number of times. Therefore, it is determined whether there is any family to be abolished (step S104).

If there is no family to be abolished ("NO" at step S104), processing proceeds to step S108.

Meanwhile, if there is a family to be abolished ("YES" at step S104), processing proceeds to step S105. In this case, the family is abolished by changing, to 0, the flag that is stored in the idea DB 102 and indicative of the existence of ideas belonging to the family to be abolished (step S105).

In a case where the button-type evaluation scheme is adopted as a family abolishment criterion, for example, the following method may be used. First of all, the following equations are used to calculate a family evaluation rate, a family evaluation, and a family display count.

```
Family evaluation rate =
    family evaluation/family display count if family display count >0
    c                                       otherwise (=0)

                                        --- Equation 1
```

Family evaluation = evaluation of initial idea + lower family evaluation of initial idea --- Equation 2    Equation 2

Family display count = display count of initial idea + lower family display count of initial idea --- Equation 3    Equation 3

It should be noted that c is a parameter. For example, the value 2 is used as parameter c. As described above, the calculated family evaluation rate corresponds to the probability of vote button depression with respect to an idea of a family displayed on the idea evaluation/proposal screen 200. Therefore, the calculated family evaluation rate can be regarded as an index for family quality evaluation and used as the family abolishment criterion.

Eventually, a family having a family evaluation rate of lower than a threshold (e.g. , 0.5) or a family having the lowest family evaluation rate should be abolished.

In a case where the family evaluation rate is used alone for a family displayed only once and the vote button is not depressed so that the evaluation is 0, the family evaluation rate is 0 so that the family may be abolished immediately after creation. To avoid such a situation, only families having a family display count equal to or higher than a specified count (e.g., a count of 3) are abolished.

Meanwhile, the family evaluation and the family display count can be converted with a function. For example, the family evaluation rate can be calculated by using function f indicated below. In a case where the family display count is lower than a, the family evaluation rate can be evaluated to be higher than expressed by Equation 1. As a result, a family abolishment capability can be used without being limited by the family display count.

```
Family evaluation rate =
   f (family evaluation)/f (family display count) if family display count>0

   c                                                otherwise (=0)
                                                    --- Equation 4


f(x) = sin((x/a-1) × π/2) + b   if x<a

       (x/a-1) × π/2 + b        otherwise (x≥a)
                                                    --- Equation 5
```

In the above equation, n is the ratio of the circumference of a circle to its diameter, and a and b are function parameters. For example, a = 3 and b = 1.5.

Further, in a case where a family having a minimum family evaluation rate is to be abolished, it is necessary to determine the frequency of abolishment. For example, an applicable method is to abolish one family each time and allow a participant to freely input an idea and respectively input ideas piggybacked-on to two families. Another applicable method is to abolish a family once every specified number of sessions (e.g., once every five sessions).

In the case where the score-based evaluation scheme is adopted, it can be used as the family abolishment criterion by calculating the family display count as indicated below.

Family display count = (display count of initial idea + lower family display count of initial idea × maximum settable score --- Equation 6

Equation 6

In the above instance, the maximum settable score is 10 if a score of 0 to 10 is selectable in a case where, for example, a slider or a radio button is used to evaluate one idea. Alternatively, the maximum or average score of all ideas may be used instead of the maximum settable score.

Another alternative is to use another index, for example, by using the family evaluation as is as the family abolishment criterion instead of the family evaluation rate. Still another alternative is to simultaneously abolish a plurality of families.

Next, since the number of families is decreased by family abolishment, a family is newly created in order to keep the number of families at N (step S106).

Next, in response to a new family creation, k is set to be equal to k + 1 (step S107).

More specifically, the idea selection algorithm 103 abolishes a family having a low family evaluation rate and creates a new family.

The above-described calculation determines the number k of families to be newly created.

Next, (K - k) families to be displayed as drafts are selected (step S108). No drafts need to be selected for the k families, which are to be newly created. Therefore, drafts are selected for the remaining (K - k) families. In a case where M = 1, (K - k) ideas are selected from different families. In a case where M > 1, M ideas are selected from the same family. That is to say, the families to be displayed are first selected, and then M ideas are selected from each of the selected families. This is more efficient than directly selecting ((K - k) $\times$ M) ideas.

The family evaluation rate can also be used for family selection. The family evaluation rate is calculated for all existing families, and then one family is selected by using random numbers, as is the case with roulette selection in genetic algorithms, with a probability corresponding to the magnitude of the calculation result.

More specifically, based on the parent-child relationship between ideas, the idea selection algorithm 103 calculates, for each of families of the ideas having the same ancestor, the sum of evaluations and the sum of display counts of all ideas included in the families of the ideas, uses the family evaluation rate, which is the ratio between the sum of evaluations of the ideas and the sum of display counts of the ideas, in order to determine the families to be selected, and selects a draft from each of the selected families.

Further, the idea selection algorithm 103 selects two or more ideas from a family as drafts.

In a case where additional families need to be selected, the idea selection algorithm 103 uses the same method as described above in order to select one family after another except for already selected families.

If, in the case of family selection, the family display count is used as a threshold, as is the case with family abolishment, only new families are evaluated until the threshold is reached. Therefore, an opportunity to piggyback on the ideas of high-quality families may be impaired.

Accordingly, by using the family evaluation rate indicated in Equation 4 and using parameters a and b of function f in Equation 5, it is possible to adjust the probability of a family having a small display count and a highly-reputed family (a family having a high family evaluation rate defined in Equation 1) of being selected. This makes it possible to build an environment where high-quality ideas are likely to be created.

Although a roulette selection method is used here, an alternative is to use a tournament selection method or other selection method, such as a method of selecting all families with equal probability or a non-probabilistic method of selecting (K - k) families having a relatively high family evaluation rate.

Further, instead of family evaluation rate in Equation 4, for example, family evaluation rate in Equation 1, family evaluation in Equation 2, family display count in Equation 3, or f (family evaluation) or f (family display count) in Equation 4 may be used. Furthermore, other indexes may be defined to select families. Meanwhile, the definition of f in Equation 5 need not always be complied with. The same functionality can be provided by a function whose gradient remains small when an integer x of 0 or greater is a small value and increases with an increase in the integer x. Moreover, f having characteristics quite different from Equation 5 may be used.

Finally, M ideas to be displayed are selected from each of the selected (K - k) families (step S109).

A family of ideas in idea selection according to the first embodiment will now be described.

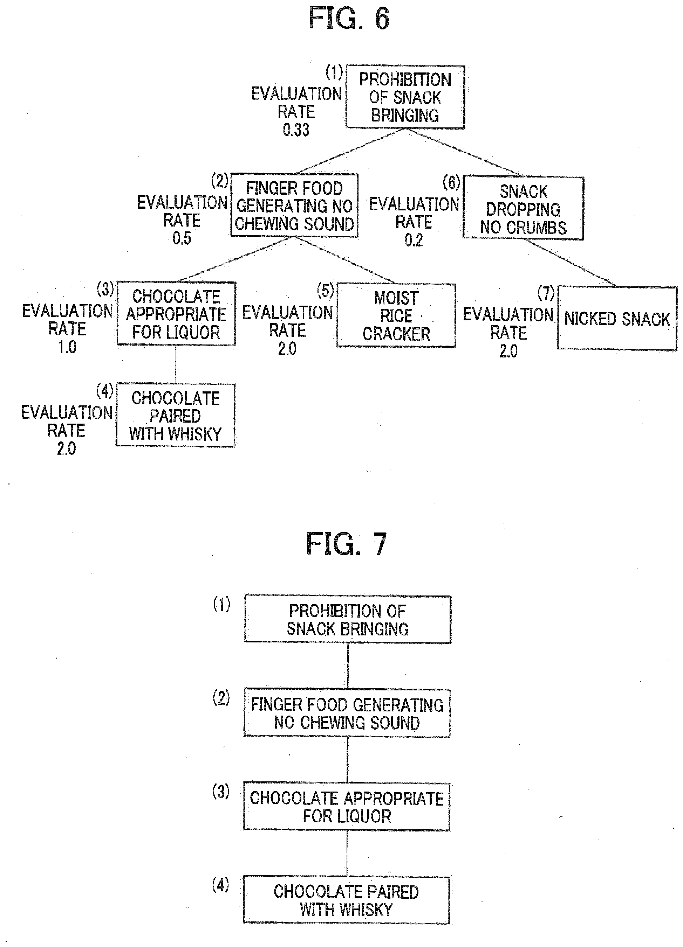

Fig. 6 is an explanatory diagram illustrating a family of ideas in idea selection according to the first embodiment.

Fig. 7 is an explanatory diagram illustrating a family (straight chain) of ideas in idea selection according to the first embodiment.

When attention is focused on a certain family (idea 1 depicted in Fig. 2 in the first embodiment), a family tree of ideas has a tree structure as depicted in Fig. 6. Fig. 6 depicts a general tree structure. Meanwhile, in a case where only one child piggybacks on one parent, the family tree of ideas is a straight chain as depicted in Fig. 7. It is assumed that such a straight chain is also regarded as a tree structure.

First of all, an idea selection method for use in a situation where the family tree of ideas is a straight chain will be described.

In a case where the number of ideas included in the straight chain is m and m $\leq$ M, the idea evaluation/proposal screen 200 displays m ideas in the order of generation.

In a case where m < M, some drafts should be left blank. For example, when m = 2 and M = 3, the (i-2)th generation depicted in Fig. 2 is left blank, and drafts are displayed for the (i-1)th and generations in Fig. 2. It is obvious that the other rows may be left blank.

Meanwhile, in a case where m > M, roughly two different selection methods are available.

A first method is to select one idea that is to be displayed as the ith generation, and display an idea of its direct ancestor (parent or grandparent in a case where M = 3), for example, as the (i-1)th generation. In this case, when one idea is selected, the remaining (M - 1) ideas are automatically determined. This method is hereinafter referred to as serial selection.

A second method is to individually select M ideas. In this case, the parent-child relationship between the M ideas to be displayed is not always maintained. More specifically, there may be a gap between generations. Referring, for example, to Fig. 2, an idea of the second generation may be provided for the (i-2)th generation depicted in Fig. 2, an idea of the fourth generation may be provided for the (i-1)th generation, and an idea of the seventh generation may be provided for the ith generation. Further, the order of display and the order of generation may become reversed so as to provide an idea of the fifth generation for the (i-1)th generation and provide an idea of the third generation for the ith generation. This method is hereinafter referred to as individual selection.

A method of calculating an idea evaluation rate in the following manner is available as a specific idea selection method for use in a situation where the family tree of ideas is a straight chain.

```
Evaluation rate =
    f(evaluation)/f(display count)    if display count >0
    ·c                                otherwise (=0)
```

--- Equation 7

In the above instance, function f is used. However, an alternative is to adopt a calculation method that does not use function f. Further, c need not be equal to the family evaluation rate.

By using Equation 7, the evaluation rate of every idea existing in a family is calculated, and then one idea is selected with aprobability corresponding to the evaluation rate (probabilistic method) . Meanwhile, an idea having a high evaluation rate is selected without using the probability (non-probabilistic method).

In the case of serial selection, the selected idea is displayed as the ith generation in Fig. 2, and its direct ancestor is displayed together. In a case where an idea of "existence = 0" exists in the ancestor to be displayed, the ancestor is ignored, for example, to display an idea of a higher generation, leave the draft display section 201 of the ancestor blank, or hide the draft evaluation section 202 of the ancestor.

Meanwhile, when a plurality of ideas need to be selected in the case of individual selection, the next idea is selected based on the evaluation rates of the remaining ideas except for already selected ideas either by the former probabilistic method or by the latter non-probabilistic method

A plurality of methods are available for displaying on the idea evaluation/proposal screen 200 at the time of individual selection.

A first method is to rearrange the M selected ideas in the order of generation and display the rearranged ideas in order from the lowest generation to the highest generation, beginning with the (i-2)th generation in Fig. 2 and continuing to the ith generation in Fig. 2. This ensures that the newest one of the selected ideas is piggybacked on. Therefore, the ideas can be positively modified. As a result, it is expected that the ideas will be diffused and more diversified by a global exploration. In this instance, the other ideas serve as a hint for piggybacking. Further, a rigorous evaluation is performed by an increase in the display count.

A second method is to rearrange the M selected ideas in the order of evaluation rate and display the rearranged ideas in order from the lowest evaluation rate to the highest evaluation rate, beginning with the (i-2)th generation in Fig. 2 and continuing to the ith generation in Fig. 2. This enables the participants to piggyback on a selected idea having the highest evaluation rate. Consequently, the ideas can be converged by performing a local exploration of the vicinity of ideas having a high evaluation rate. In this instance, the evaluation rates of the other ideas can be increased by a rigorous evaluation due to an increase in the display count. This contributes to escape from a local optimal solution.

A third method is to display the M selected ideas in the order of selection, beginning with the ith generation in Fig. 2 and continuing to the (i-2)th generation in Fig. 2. Ideas having a high evaluation rate are likely to be selected early. Therefore, the third method is similar in nature to the second method. However, in a case where the evaluation rate is calculated by using function f, ideas having a small display count are also displayed as the ith generation in Fig. 2 with an increased probability.

When the second or third method is used, the result is displayed as the ith generation in Fig. 2 so that the characteristics of an idea to be directly piggybacked on significantly vary depending on parameter c. The maximum value of the evaluation rate of an idea having a display count of 1 or higher is 1. Therefore, in a case where c > 1, a new idea having a display count of 0 is displayed as the ith generation in Fig. 2 with an increased probability. This activates the diffusion of ideas. In a case where c < 1, an idea having a display count of 1 or higher and a high evaluation rate is also selected with a higher probability than a new idea. This activates the convergence of ideas.

Stated differently, when calculating at least either the evaluation rate or the family evaluation rate, the idea selection algorithm 103 evaluates that the evaluation rate or family evaluation rate having a low display count or a low total display count is higher than the evaluation rate or family evaluation rate having a high display count or a high total display count.

Further, when parameter c is set to a great value (e.g., c = 2) at an early stage of brainstorming and defined as a function that decreases with an increase in the number of ideas n, the role of brainstorming can be managed so as to provide diffusion at the early stage and provide convergence at a late stage. A similar method can be used for the family evaluation rate.

Stated differently, when calculating at least either the evaluation rate or the family evaluation rate, the idea selection algorithm 103 uses parameter c to determine the evaluation rate or family evaluation rate in a case where the display count is 0, and causes the value of parameter c to decrease with an increase in the number of ideas stored in the idea DB 102.

Further, selecting one of the above three methods in accordance with the number of ideas n is effective for managing the diffusion and convergence of ideas. More specifically, in a case where the number of ideas n is small, the first method is used to activate the diffusion of ideas, and when the number of ideas n is increased, the second or third method is used.

Moreover, the three methods may be probabilistically selected. More specifically, the probability of selection of the three methods may be defined as a function of the number of ideas n so as to select the first method with a high probability in a case where the number of ideas n is small and select the second or third method when the number of ideas n is increased.

The idea selection method for use in a situation where the family tree of ideas is not a straight chain will now be described.

In the case of serial selection, the same selection method as in the case of the straight chain should be used.

In the case of individual selection, too, the same selection method as in the case of the straight chain may be used. Further, selection targets may be limited. For example, in the case of the family tree of ideas depicted in Fig. 6, using a method of straight chain individual selection as is may result in the selection of an idea that is not a direct ancestor, as indicated at (4), (5), and (6).

The above problem may be avoided by determining a first idea out of M ideas to be selected, and then limiting the subsequent selection target ideas to the ancestors and descendants of the first idea. For example, in a case where (2) is selected as the first idea from the family tree of ideas depicted in Fig. 6, candidates to be selected as a second idea are limited to (1), (3), (4), and (5) . Further, in a case where (4) is selected as the second idea, candidates to be selected as a third idea are limited to (1) and (3). This makes it possible to select M ideas that are direct descendants.

As an alternative to the above-described idea selection methods, a method of using, for example, the evaluation, the display count, f(evaluation), or f(display count) instead of the evaluation rate may be adopted. As another alternative, the latest idea belonging to a selected family may be constantly displayed as the ith generation.

In a case where the evaluation or f (evaluation) is used as is, ideas having an increased number of evaluations are preferentially selected due to old generations and high display counts. Therefore, it is highly probable that ideas are biased. Such bias of ideas can be corrected by using the evaluation rate for selection. Further, as long as the same advantageous effects are obtained, a function or selection method different from the function formed in Equation 7 may be used.

M ideas are selected from each family by using the above-described selection method to let the idea evaluation/proposal screen 200 display ((K - k) $\times$ M) selected ideas.

Ideas 1 to 3 of the family depicted in Fig. 2 may be displayed from left to right in order from the highest family evaluation rate to the lowest, in order of family selection, in order from family number in the idea DB, or in random order. In Fig. 2, for the sake of convenience, the (i-2) th generation, the (i-1)th generation, the ith generation, and the (i+1)th generation are displayed. However, in a case where ideas are to be individually selected, notational generations and actual generations need not coincide with each other. As for ideas 1 to 3, for example, ideas of the same generation need not be arranged under the ith generation.

More specifically, the idea selection algorithm 103 uses the evaluation rate, which is the ratio between a participant's evaluation and a display count of a draft, in order to select the idea to be displayed.

As described above, the first embodiment selects a good idea by using the collective knowledge of a large number of unspecified on-line participants, makes use of the framework of brain writing, positively piggybacks on the good idea, and systematically enhances the quality and quantity of ideas.

[Second Embodiment]

A second embodiment of the present invention will now be described with reference to a method of taking the attributes of participants into consideration when the idea selection algorithm 103 selects ideas.

The second embodiment differs from the first embodiment in that the former additionally takes the attributes of participants into consideration.

Since the idea DB 102 stores the names and identification numbers of proposers (participants), the idea DB 102 can be collated with a separate database indicative of separately stored attributes of the participants. More specifically, the separate database stores the attributes of the proposers linked to the names and identification numbers of the proposers.

The attributes include, for example, general attributes, such as age, gender, occupation, and lifestyle, and attributes dedicated to use in an organization or a corporation, such as job description, job title, achievements, income, and duty hours.

The idea DB 102 stores the names and identification numbers of participants who evaluated the ideas. Meanwhile, the separate database stores the attributes of the participants linked to the names and identification numbers of the participants.

Based on the attributes of participants identified by the names and identification numbers of the participants, the idea selection algorithm 103 calculates the evaluation rate or the family evaluation rate in a case where target participants are limited to participants having specific attributes.

In a case where ideas are viewed and evaluated by a large number of participants, the ideas preferable to participants having specific attributes can be selected by using the evaluation rate for a cluster of participants having the same attributes instead of simply calculating the evaluation rate from the display count and evaluation.

The above can be accomplished by providing the idea DB 102 depicted in Fig. 4 with a "Viewer" column. The "Viewer" column stores the names and identification numbers of participants who displayed a present idea.

A combination of attributes permitting the classification into evaluators and viewers excluding the evaluators (the participants who have not voted for ideas) by using information stored in the "Viewer" column and information stored in the "Evaluator" column is identified by using, for example, machine learning such as a decision tree.

By calculating the evaluation rate based on the result of evaluation of viewers having the above-identified attributes, it is possible to increase the evaluation rate of ideas preferable to the participants having specific attributes and thus promote piggybacking on such ideas. Even in a case where the score-based evaluation scheme is adopted, it is possible to use, for example, machine learning in order to identify the combination of attributes permitting the classification of the scores of each viewer.

Accordingly, the second embodiment selects a good idea by using the collective knowledge of a large number of unspecified on-line participants, and positively piggybacks on the good idea to further enhance the quality and quantity of ideas.

[Third Embodiment]

Configurations of the interface 101 according to a third embodiment of the present invention will now be described.

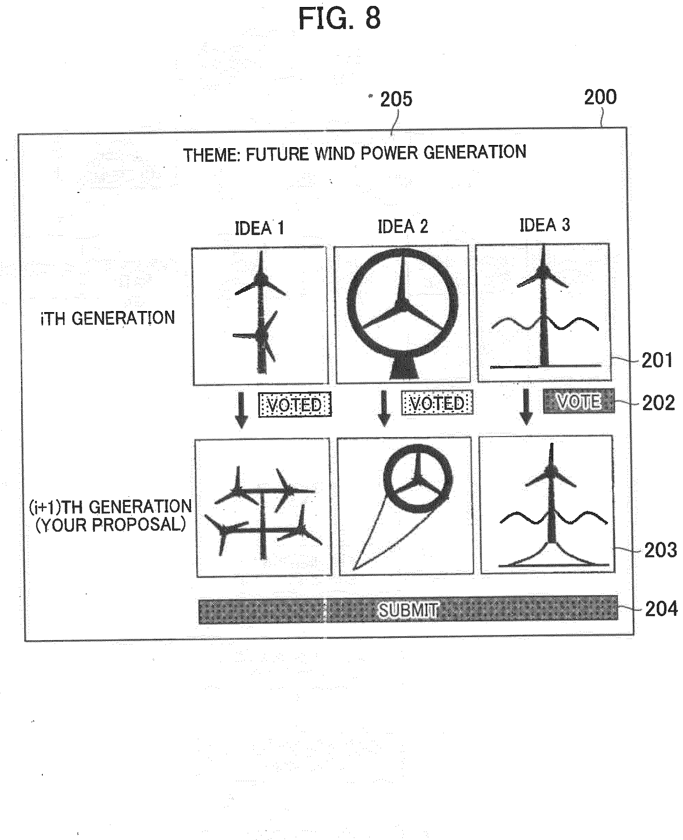

Fig. 8 is an explanatory diagram illustrating a configuration (pictures) of the interface 101 according to the third embodiment.

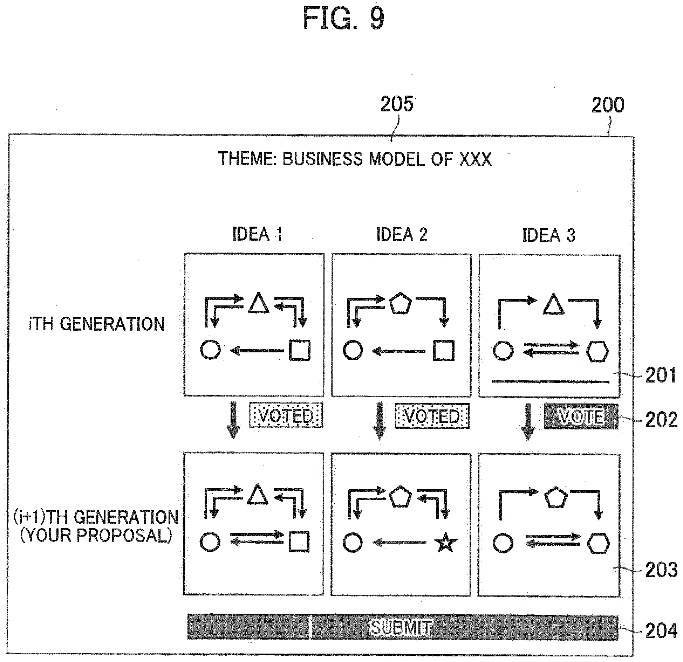

Fig. 9 is an explanatory diagram illustrating a configuration (graph structures) of the interface 101 according to the third embodiment.

The third embodiment is described below with reference to a method of inputting an idea to the interface 101 as a picture or a graph structure instead of a character string. It should be noted that the (i-2) th and (i-1)th generations are omitted from Figs. 8 and 9 due to space limitations.

More specifically, the interface 101 displays drafts and proposals as pictures or graph structures, and receives inputs. Further, it is preferable that, when the proposals are inputted by using the pictures, the interface 101 be capable of automatically modifying the pictures.

Fig. 8 illustrates a configuration of the interface 101 of the idea generation support device 100 in a case where pictures are used.

Although the component parts of the interface 101 are the same as depicted in Fig. 2, the interface 101 is configured such that the pictures can be inputted to the free input field. The pictures may be uploaded as a file or edited through the interface 101. Further, in order to modify handwritten pictures into a form easily understood by other persons, the interface 101 may have a general function of automatically modifying the pictures and appending character strings to the pictures.

Using the pictures in the above-described manner makes it possible to provide idea generation support, for example, in the field of concept and design, which are not easily expressed in language.

Fig. 9 illustrates a configuration the interface 101 of the idea generation support device 100 in a case where graph structures are used.

Although the component parts of the interface 101 are the same as depicted in Fig. 2, the interface 101 is configured such that pictures can be used for graph structure nodes to express the relationship between the pictures by arrows and inputted to the free input field. Obviously, character strings may be appended to the pictures and arrows to facilitate understanding by the participants. In a case where the graph structures are used, the participants make a proposal by piggybacking on ideas, that is, by modifying or adding the graph structures and changing the character strings.

Using the graph structures in the above-described manner makes it possible to provide idea generation support to business models and other intangible assets.

The present invention is not limited to the foregoing embodiments, and can be modified in various ways. For example, the foregoing embodiments have been described in detail in order to facilitate understanding of the present invention. The present invention is not necessarily limited to configurations that include all of the above-described component elements.

Further, some of the above-described component elements of a foregoing embodiment may be replaced by some of the component elements of another foregoing embodiment. Furthermore, the component elements of a foregoing embodiment may be added to the component elements of another foregoing embodiment. Moreover, some component elements of each foregoing embodiment may be deleted, subjected to the addition of other component elements, or replaced by other component elements.

List of Reference Signs

| 100 | Idea generation support device |
|---|---|
| 101 | Interface |
| 102 | Idea DB |
| 103 | Idea selection algorithm |
| 200 | Idea evaluation/proposal screen |
| 201 | Draft display section |
| 202 | Draft evaluation section |
| 203 | Proposal reception section |
| 204 | Submission button |
| 205 | Theme |

**Claims**

1. An idea generation support device (100), comprising:

   an idea database (102) that stores ideas, the evaluations of the ideas, and the parent-child relationship between the ideas;
   a computation section (103) that selects, as drafts, the ideas to be displayed based on the evaluation thereof; and
   an interface (101) that displays the drafts, and inputs participants' evaluations of the drafts and proposals, the proposals being new ideas derived from the drafts regarded as parents,
   wherein the idea database (102) stores display counts of the ideas, and
   wherein the computation section (103) uses the participants' evaluations of the drafts and the display counts to select the ideas to be displayed,
   wherein the computation section (103) uses an evaluation rate to select the ideas to be displayed, the evaluation rate being the ratio between the participants' evaluations of the drafts and the display counts,
   wherein, based on the parent-child relationship between the ideas, the computation section (103) calculates, for each of families of the ideas having the same ancestor, the sum of evaluations and the sum of display counts of all ideas included in the families of the ideas, uses a family evaluation rate, that is, the ratio between the sum of evaluations of the ideas and the sum of display counts of the ideas, in order to determine the families to be selected, and selects the drafts from each of the selected families by using the evaluation rate,
   wherein when calculating at least either the evaluation rate or the family evaluation rate, the computation section (103) evaluates that the evaluation rate or the family evaluation rate having a low display count or a low total display count is higher than the evaluation rate or the family evaluation rate having a high display count or a high total display count.

2. The idea generation support device (100) according to claim 1,

   wherein the computation section (103) selects, as the drafts, two or more of the ideas from the families, and
   wherein the interface (101) arranges the two or more drafts in the same row or column so as to indicate that the drafts are ideas belonging to the same family, or displays the drafts in such a manner that the drafts are connected by lines or arrows.

3. The idea generation support device (100) according to claim 2,
   wherein the computation section (103) abolishes the family having a low family evaluation rate, and creates a new family.

4. The idea generation support device (100) according to claim 1,
   wherein, when calculating at least either the evaluation rate or the family evaluation rate, the computation section (103) uses parameter c to determine the evaluation rate or the family evaluation rate in a case where the display count is 0, and causes the value of parameter c to decrease with an increase in the number of ideas stored in the idea database (102).

**5.** The idea generation support device (100) according to claim 1,

wherein the idea database (102) stores identification numbers of participants who evaluated the ideas, and wherein, based on the attributes of participants identified by the identification numbers, the computation section (103) calculates the evaluation rate or the family evaluation rate in a case where target participants are limited to participants having specific attributes.

**6.** The idea generation support device (100) according to claim 1,
wherein the interface (101) displays the drafts and the proposals as pictures or graph structures, and receives inputs.

**7.** The idea generation support device (100) according to claim 6,
wherein, when inputting the proposals by using pictures, the interface (101) is capable of automatically modifying the pictures.

**8.** An idea generation support method comprising the steps of:

causing an idea database (102) to store ideas, the evaluations of the ideas, and the parent-child relationship between the ideas;
causing a computation section (103) to select, as drafts, the ideas to be displayed based on the evaluation thereof; and
causing an interface (101) to display the drafts, and input participants' evaluations of the drafts and proposals, the proposals being new ideas derived from the drafts regarded as parents, wherein
the idea database (102) stores display counts of the ideas, and
wherein the computation section (103) uses the participants' evaluations of the drafts and the display counts to select the ideas to be displayed, wherein the computation section (103) uses an evaluation rate to select the ideas to be displayed, the evaluation rate being the ratio between the participants' evaluations of the drafts and the display counts, wherein,
based on the parent-child relationship between the ideas, the computation section (103) calculates, for each of families of the ideas having the same ancestor, the sum of evaluations and the sum of display counts of all ideas included in the families of the ideas, uses a family evaluation rate, that is, the ratio between the sum of evaluations of the ideas and the sum of display counts of the ideas, in order to determine the families to be selected, and selects the drafts from each of the selected families by using the evaluation rate,
wherein
when calculating at least either the evaluation rate or the family evaluation rate, the computation section (103) evaluates that the evaluation rate or the family evaluation rate having a low display count or a low total display count is higher than the evaluation rate or the family evaluation rate having a high display count or a high total display count.

**Patentansprüche**

**1.** Ideenerzeugungs-Unterstützungsvorrichtung (100), die Folgendes umfasst:

eine Ideendatenbank (102), die Ideen, die Bewertungen der Ideen und die Eltern-Kind-Beziehung zwischen den Ideen speichert;
einen Berechnungsabschnitt (103), der die anzuzeigenden Ideen auf der Grundlage ihrer Bewertung als Entwürfe auswählt; und
eine Schnittstelle (101), die die Entwürfe anzeigt und Bewertungen der Teilnehmer der Entwürfe und Vorschläge eingibt, wobei die Vorschläge neue Ideen sind, die von den Entwürfen abgeleitet werden, die als Eltern betrachtet werden,
wobei die Ideendatenbank (102) Anzeigezählungen der Ideen speichert, und
wobei der Berechnungsabschnitt (103) die Bewertungen der Teilnehmer der Entwürfe und die Anzeigezählungen verwendet, um die anzuzeigenden Ideen auszuwählen,
wobei der Berechnungsabschnitt (103) eine Bewertungsrate verwendet, um die anzuzeigenden Ideen auszuwählen, wobei die Bewertungsrate das Verhältnis zwischen den Bewertungen der Teilnehmer der Entwürfe und den Anzeigezählungen ist,
wobei der Berechnungsabschnitt (103) auf der Grundlage der Eltern-Kind-Beziehung zwischen den Ideen für jede der Familien der Ideen, die denselben Vorfahren aufweisen, die Summe der Bewertungen und die Summe der Anzeigezählungen aller Ideen, die in den Familien der Ideen enthalten sind, berechnet, eine Familienbewertungsrate, das heißt, das Verhältnis zwischen der Summe der Bewertungen der Ideen und der Summe der Anzeigezählungen der Ideen, verwendet, um die auszuwählenden Familien zu bestimmen, und unter Verwendung der Bewertungsrate die Entwürfe aus jeder der ausgewählten Familien auswählt,

wobei dann, wenn zumindest entweder die Bewertungsrate oder die Familienbewertungsrate berechnet wird, der Berechnungsabschnitt (103) bewertet, dass die Bewertungsrate oder die Familienbewertungsrate, die eine niedrige Anzeigezählung oder eine niedrige Gesamtanzeigezählung aufweist, höher ist als die Bewertungsrate oder die Familienbewertungsrate, die eine hohe Anzeigezählung oder einer hohe Gesamtanzeigezählung aufweist.

2.  Ideenerzeugungs-Unterstützungsvorrichtung (100) nach Anspruch 1,

    wobei der Berechnungsabschnitt (103) zwei oder mehr der Ideen aus den Familien als die Entwürfe auswählt, und

    wobei die Schnittstelle (101) die zwei oder mehr Entwürfe in derselben Zeile oder Spalte anordnet, um anzugeben, dass die Entwürfe Ideen sind, die zu derselben Familie gehören, oder die Entwürfe auf eine derartige Weise anzeigt, dass die Entwürfe durch Linien oder Pfeile verbunden sind.

3.  Ideenerzeugungs-Unterstützungsvorrichtung (100) nach Anspruch 2,
    wobei der Berechnungsabschnitt (103) die Familie, die eine niedrige Familienbewertungsrate aufweist, beseitigt und eine neue Familie erzeugt.

4.  Ideenerzeugungs-Unterstützungsvorrichtung (100) nach Anspruch 1,
    wobei dann, wenn zumindest entweder die Bewertungsrate oder die Familienbewertungsrate berechnet wird, der Berechnungsabschnitt (103) einen Parameter c verwendet, um die Bewertungsrate oder die Familienbewertungsrate zu bestimmen, wenn die Anzeigezählung 0 ist, und bewirkt, dass der Wert des Parameters c mit einer Zunahme der Anzahl der Ideen, die in der Ideendatenbank (102) gespeichert sind, abnimmt.

5.  Ideenerzeugungs-Unterstützungsvorrichtung (100) nach Anspruch 1,

    wobei die Ideendatenbank (102) Kennnummern der Teilnehmer, die die Ideen bewertet haben, speichert, und
    wobei der Berechnungsabschnitt (103) auf der Grundlage der Attribute der Teilnehmer, die durch die Kennnummern identifiziert werden, die Bewertungsrate oder die Familienbewertungsrate berechnet, wenn Zielgruppenteilnehmer auf Teilnehmer eingeschränkt sind, die spezifische Attribute aufweisen.

6.  Ideenerzeugungs-Unterstützungsvorrichtung (100) nach Anspruch 1,
    wobei die Schnittstelle (101) die Entwürfe und die Vorschläge als Bilder oder grafische Strukturen anzeigt und Eingaben empfängt.

7.  Ideenerzeugungs-Unterstützungsvorrichtung (100) nach Anspruch 6,
    wobei dann, wenn die Vorschläge unter Verwendung von Bildern eingegeben werden, die Schnittstelle (101) die Bilder automatisch verändern kann.

8.  Ideenerzeugungs-Unterstützungsverfahren, das die folgenden Schritte umfasst:

    Bewirken, dass eine Ideendatenbank (102) Ideen, die Bewertungen der Ideen und die Eltern-Kind-Beziehung zwischen den Ideen speichert;
    Bewirken, dass ein Berechnungsabschnitt (103) die anzuzeigenden Ideen auf der Grundlage ihrer Bewertung als Entwürfe auswählt; und
    Bewirken, dass eine Schnittstelle (101) die Entwürfe anzeigt und Bewertungen der Teilnehmer der Entwürfe und Vorschläge eingibt, wobei die Vorschläge neue Ideen sind, die von den Entwürfen abgeleitet werden, die als Eltern betrachtet werden, wobei
    die Ideendatenbank (102) Anzeigezählungen der Ideen speichert, und
    wobei der Berechnungsabschnitt (103) die Bewertungen der Teilnehmer der Entwürfe und die Anzeigezählungen verwendet, um die anzuzeigenden Ideen auszuwählen, wobei der Berechnungsabschnitt (103) eine Bewertungsrate verwendet, um die anzuzeigenden Ideen auszuwählen, wobei die Bewertungsrate das Verhältnis zwischen den Bewertungen der Teilnehmer der Entwürfe und den Anzeigezählungen ist, wobei
    der Berechnungsabschnitt (103) auf der Grundlage der Eltern-Kind-Beziehung zwischen den Ideen für jede der Familien der Ideen, die denselben Vorfahren aufweisen, die Summe der Bewertungen und die Summe der Anzeigezählungen aller Ideen, die in den Familien der Ideen enthalten sind, berechnet, eine Familienbewertungsrate, das heißt, das Verhältnis zwischen der Summe der Bewertungen der Ideen und der Summe der Anzeigezählungen der Ideen, verwendet, um die auszuwählenden Familien zu bestimmen, und unter Verwendung der Bewertungsrate die Entwürfe aus jeder der ausgewählten Familien auswählt,

wobei dann, wenn zumindest entweder die Bewertungsrate oder die Familienbewertungsrate berechnet wird, der Berechnungsabschnitt (103) bewertet, dass die Bewertungsrate oder die Familienbewertungsrate, die eine niedrige Anzeigezählung oder eine niedrige Gesamtanzeigezählung aufweist, höher ist als die Bewertungsrate oder die Familienbewertungsrate, die eine hohe Anzeigezählung oder einer hohe Gesamtanzeigezählung aufweist.

## Revendications

1. Dispositif d'aide à la génération d'idées (100), comprenant :

   une base de données d'idées (102) qui stocke des idées, les évaluations des idées, et la relation parent/enfant entre les idées ;
   une section de calcul (33) qui sélectionne, à titre d'ébauches, les idées devant être affichées sur la base de l'évaluation de celles-ci ; et
   une interface (101) qui affiche les ébauches, et qui entre des évaluations de participants des ébauches et des propositions, les propositions étant de nouvelles idées dérivées des ébauches considérées comme parents,
   dans lequel la base de données d'idées (102) stocke des comptages d'affichage des idées, et
   dans lequel la section de calcul (103) utilise les évaluations de participants des ébauches et les comptages d'affichage pour sélectionner les idées devant être affichées,
   dans lequel la section de calcul (103) utilise un taux d'évaluation pour sélectionner les idées devant être affichées, le taux d'évaluation étant le rapport entre les évaluations de participants des ébauches et les comptages d'affichage,
   dans lequel, sur la base de la relation parent/enfant entre les idées, la section de calcul (103) calcule, pour chacune de familles des idées ayant le même ancêtre, la somme d'évaluations et la somme de comptages d'affichage de toutes les idées incluses dans les familles des idées, utilise un taux d'évaluation de famille, à savoir, le rapport entre la somme d'évaluations des idées et la somme de comptages d'affichage des idées, afin de déterminer les familles devant être sélectionnées, et sélectionne les ébauches à partir de chacune des familles sélectionnées en utilisant le taux d'évaluation,
   dans lequel
   lors du calcul au moins de l'un ou l'autre du taux d'évaluation ou du taux d'évaluation de famille, la section de calcul (103) évalue que le taux d'évaluation ou le taux d'évaluation de famille ayant un comptage d'affichage faible ou un comptage d'affichage total faible est supérieur au taux d'évaluation ou au taux d'évaluation de famille ayant un comptage d'affichage élevé ou un comptage d'affichage total élevé.

2. Dispositif d'aide à la génération d'idées (100) selon la revendication 1,

   dans lequel la section de calcul (103) sélectionne, à titre d'ébauches, deux ou plusieurs des idées provenant des familles, et
   dans lequel l'interface (101) agence lesdites deux ou plusieurs ébauches dans la même rangée ou colonne de manière à indiquer que les ébauches sont des idées appartenant à la même famille, ou affiche les ébauches de telle manière que les ébauches sont reliées par des lignes ou des flèches.

3. Dispositif d'aide à la génération d'idées (100) selon la revendication 2,
   dans lequel la section de calcul (103) supprime la famille ayant un taux d'évaluation de famille faible, et crée une nouvelle famille.

4. Dispositif d'aide à la génération d'idées (100) selon la revendication 1,
   dans lequel, lors du calcul au moins de l'un ou l'autre du taux d'évaluation ou du taux d'évaluation de famille, la section de calcul (103) utilise un paramètre c pour déterminer le taux d'évaluation ou le taux d'évaluation de famille dans un cas où le comptage d'affichage est égal à 0, et amène la valeur de paramètre c à diminuer avec une augmentation dans le nombre d'idées stockées dans la base de données d'idées (102).

**5.** Dispositif d'aide à la génération d'idées (100) selon la revendication 1,

dans lequel la base de données d'idées (102) stocke des numéros d'identification de participants qui ont évalué les idées, et

dans lequel, sur la base des attributs de participants identifiés par les numéros d'identification, la section de calcul (103) calcule le taux d'évaluation ou le taux d'évaluation de famille dans un cas où des participants cibles sont limités à des participants ayant des attributs spécifiques.

**6.** Dispositif d'aide à la génération d'idées (100) selon la revendication 1,

dans lequel l'interface (101) affiche les ébauches et les propositions sous forme d'images ou de structures graphiques, et reçoit des entrées.

**7.** Dispositif d'aide à la génération d'idées (100) selon la revendication 6,

dans lequel, lors d'une entrée des propositions en utilisant des images, l'interface (101) est en mesure de modifier les images automatiquement.

**8.** Procédé d'aide à la génération d'idées sur comprenant les étapes consistant à :

amener une base de données d'idées (102) à stocker des idées, les évaluations des idées, et la relation parent/enfant entre les idées ;

amener une section de calcul (103) à sélectionner, à titre d'ébauches, les idées devant être affichées sur la base de l'évaluation de celles-ci ; et

amener une interface (101) afficher les ébauches, et entrer des évaluations de participants des ébauches et de propositions, les propositions étant de nouvelles idées dérivées des ébauches considérées comme parents, dans lequel

dans lequel la base de données d'idées (102) stocke des comptages d'affichage des idées, et

dans lequel la section de calcul (103) utilise les évaluations de participants des ébauches et les comptages d'affichage pour sélectionner les idées devant être affichées, dans lequel la section de calcul (103) utilise un taux d'évaluation pour sélectionner les idées devant être affichées, le taux d'évaluation étant le rapport entre les évaluations de participants des ébauches et les comptages d'affichage, dans lequel,

sur la base de la relation parent/enfant entre les idées, la section de calcul (103) calcule, pour chacune de familles des idées ayant le même ancêtre, la somme d'évaluations et la somme de comptages d'affichage de toutes les idées incluses dans les familles des idées, utilise un taux d'évaluation de famille, à savoir, le rapport entre la somme d'évaluations des idées et la somme de comptages d'affichage des idées, afin de déterminer les familles devant être sélectionnées, et sélectionne les ébauches à partir de chacune des familles sélectionnées en utilisant le taux d'évaluation,

dans lequel

lors du calcul au moins de l'un ou l'autre du taux d'évaluation ou du taux d'évaluation de famille, la section de calcul (103) évalue que le taux d'évaluation ou le taux d'évaluation de famille ayant un comptage d'affichage faible ou un comptage d'affichage total faible est supérieur au taux d'évaluation ou au taux d'évaluation de famille ayant un comptage d'affichages élevé ou un comptage d'affichage total élevé.

# FIG. 1

100

**IDEA GENERATION SUPPORT DEVICE**

101 — INTERFACE

103 — IDEA SELECTION ALGORITHM

102 — IDEA DB

# FIG. 2

205                    200

THEME: PROVIDE COMFORTABLE EATING AND DRINKING IN RAILROAD VEHICLE

|  | IDEA 1 | IDEA 2 | IDEA 3 |
|---|---|---|---|
| (i-2)TH GENERATION | PROHIBITION OF SNACK BRINGING  [VOTE] | NON-ODOROUS BOX LUNCH  [VOTE] | REVIVAL OF ONBOARD CATERING  [VOTE] |
| (i-1)TH GENERATION | FINGER FOOD GENERATING NO CHEWING SOUND  [VOTE] | LIQUOR WITHOUT SMELL OF DRUNK PERSON  [VOTE] | REVIVAL OF VENDING MACHINE  [VOTED] |
| iTH GENERATION | CHOCOLATE APPROPRIATE FOR LIQUOR  [VOTED] | AIR CONDITIONING DIFFUSING NO ODOR  [VOTED] | ONBOARD CATERING BY ROBOT — 201  [VOTE] — 202 |
| (i+1)TH GENERATION (YOUR PROPOSAL) | CHOCOLATE PAIRED WITH WHISKY | AIR FILTRATION NASAL PLUG | ORDERING WITH SMARTPHONE AND RECEIVING AT WAY STATION — 203 |

[SUBMIT] — 204

# FIG. 3

205                    200

THEME: PROVIDE COMFORTABLE EATING AND DRINKING IN RAILROAD VEHICLE

|  | IDEA 1 | IDEA 2 | IDEA 3 |
|---|---|---|---|
| FIRST GENERATION (YOUR PROPOSAL) | CHOCOLATE PAIRED WITH WHISKY | AIR FILTRATION NASAL PLUG | ORDERING WITH SMARTPHONE AND RECEIVING AT WAY STATION — 203 |

[SUBMIT] — 204

# FIG. 4

| ID | IDEA | PROPOSAL DATE AND TIME | PROPOSER | FAMILY | GENERATION | DESCENDANT COUNT | PARENT NUMBER | CHILD NUMBER | DISPLAY COUNT | EVALUATION | EVALUATOR | UPPER FAMILY EVALUATION | LOWER FAMILY EVALUATION | UPPER FAMILY DISPLAY COUNT | LOWER FAMILY DISPLAY COUNT | EXISTENCE |
|---|---|---|---|---|---|---|---|---|---|---|---|---|---|---|---|---|
| 1 | PROHIBITION OF SNACK BRINGING | 10/3 13:42 | A | 1 | 1 | 3 | 0 | 7 | 3 | 1 | C | 0 | 2 | 0 | 3 | 1 |
| 2 | NON-ODOROUS BOX LUNCH | 10/3 13:42 | A | 2 | 1 | 3 | 0 | 11 | 3 | 2 | D, F | 0 | 3 | 0 | 3 | 1 |
| 3 | REVIVAL OF ONBOARD CATERING | 10/3 13:42 | A | 3 | 1 | 3 | 0 | 8 | 3 | 1 | C | 0 | 2 | 0 | 3 | 1 |
| 4 | PROVISION OF EATING AND DRINKING SPACE | 10/3 13:51 | B | 4 | 1 | 1 | 0 | 10 | 1 | 0 | | 0 | 0 | 0 | 0 | 1 |
| 5 | CHILD SEAT NEAR TABLE | 10/3 13:51 | B | 5 | 1 | 2 | 0 | 9 | 2 | 1 | C | 0 | 1 | 0 | 1 | 1 |
| 6 | INSTALLATION OF WATER HEATER | 10/3 13:51 | B | 6 | 1 | 2 | 0 | 12 | 2 | 1 | D | 0 | 1 | 0 | 1 | 1 |
| 7 | FINGER FOOD GENERATING NO CHEWING SOUND | 10/3 15:02 | C | 1 | 2 | 1 | 1 | 16 | 2 | 1 | F | 1 | 1 | 3 | 1 | 1 |
| 8 | REVIVAL OF VENDING MACHINE | 10/3 15:02 | C | 3 | 2 | 2 | 3 | 13 | 2 | 1 | E | 1 | 1 | 3 | 1 | 1 |
| 9 | TABLE HAVING ADJUSTABLE MOVEMENT RANGE | 10/3 15:02 | C | 5 | 2 | 1 | 5 | 14 | 1 | 1 | E | 1 | 0 | 2 | 0 | 1 |
| 10 | ADDITION OF DINING CAR | 10/3 16:36 | D | 4 | 2 | 0 | 4 | | 0 | 0 | | 0 | 0 | 1 | 0 | 1 |
| 11 | LIQUOR WITHOUT SMELL OF DRUNK PERSON | 10/3 16:36 | D | 2 | 2 | 2 | 2 | 17 | 2 | 2 | F, G | 2 | 1 | 3 | 1 | 1 |
| 12 | NON-ODOROUS CUPPED NOODLES | 10/3 16:36 | D | 6 | 2 | 1 | 6 | 15 | 1 | 1 | E | 1 | 0 | 2 | 0 | 1 |
| 13 | ONBOARD CATERING BY ROBOT | 10/4 10:01 | E | 3 | 3 | 1 | 8 | 21 | 1 | 1 | G | 2 | 0 | 5 | 0 | 1 |
| 14 | CHAIR HAVING ADJUSTABLE HEIGHT | 10/4 10:01 | E | 5 | 3 | 0 | 9 | | 0 | 0 | | 2 | 0 | 3 | 0 | 1 |
| 15 | CUPPED NOODLES UNLIKELY TO SPILL DUE TO VIBRATION | 10/4 10:01 | E | 6 | 3 | 0 | 12 | | 0 | 0 | | 2 | 0 | 3 | 0 | 1 |
| 16 | CHOCOLATE APPROPRIATE FOR LIQUOR | 10/4 11:14 | F | 1 | 3 | 1 | 7 | 19 | 1 | 1 | G | 2 | 0 | 5 | 0 | 1 |
| 17 | AIR CONDITIONING DIFFUSING NO ODOR | 10/4 11:14 | F | 2 | 3 | 1 | 11 | 20 | 1 | 1 | G | 4 | 0 | 5 | 0 | 1 |
| 18 | INTRODUCTION OF DRINKING PARTY VEHICLE AND SOBRIETY VEHICLE | 10/4 11:14 | F | 7 | 1 | 0 | 0 | | 0 | 0 | | 0 | 0 | 0 | 0 | 1 |
| 19 | CHOCOLATE PAIRED WITH WHISKY | 10/4 13:07 | G | 1 | 4 | 0 | 16 | | 0 | 0 | | 3 | 0 | 6 | 0 | 1 |
| 20 | AIR FILTRATION NASAL PLUG | 10/4 13:07 | G | 2 | 4 | 0 | 17 | | 0 | 0 | | 5 | 0 | 6 | 0 | 1 |
| 21 | ORDERING WITH SMARTPHONE AND RECEIVING AT WAY STATION | 10/4 13:07 | G | 3 | 4 | 0 | 13 | | 0 | 0 | | 3 | 0 | 6 | 0 | 1 |

EP 4 131 106 B1

# FIG. 5

START (k = 0, N = 6, K = 3, M = 3) — S101

S102 — n ≥ N — NO → k = min(K, N − n) — S103

YES

S104 — ANY FAMILY TO BE ABOLISHED? — NO

YES

ABOLISH FAMILY — S105

NEWLY CREATE FAMILY — S106

k = k + 1 — S107

SELECT (K − k) FAMILIES TO BE DISPLAYED AS DRAFTS — S108

FROM EACH OF (K − k) FAMILIES, SELECT M IDEAS TO BE DISPLAYED — S109

END

# FIG. 6

(1) EVALUATION RATE 0.33 — PROHIBITION OF SNACK BRINGING

(2) EVALUATION RATE 0.5 — FINGER FOOD GENERATING NO CHEWING SOUND

(6) EVALUATION RATE 0.2 — SNACK DROPPING NO CRUMBS

(3) EVALUATION RATE 1.0 — CHOCOLATE APPROPRIATE FOR LIQUOR

(5) EVALUATION RATE 2.0 — MOIST RICE CRACKER

(7) EVALUATION RATE 2.0 — NICKED SNACK

(4) EVALUATION RATE 2.0 — CHOCOLATE PAIRED WITH WHISKY

# FIG. 7

(1) PROHIBITION OF SNACK BRINGING

(2) FINGER FOOD GENERATING NO CHEWING SOUND

(3) CHOCOLATE APPROPRIATE FOR LIQUOR

(4) CHOCOLATE PAIRED WITH WHISKY

# FIG. 8

THEME: FUTURE WIND POWER GENERATION — 205

200

IDEA 1   IDEA 2   IDEA 3

iTH GENERATION

201

VOTED   VOTED   VOTE — 202

(i+1)TH GENERATION
(YOUR PROPOSAL)

203

SUBMIT — 204

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6249466 B
- JP 5353390 B

- KR 101066224 B1